# FASCICULE DE BREVET EUROPEEN

(11) **EP 0 517 987 B1**
(45) Date de publication et mention de la délivrance du brevet: **13.09.1995**
(21) Numéro de dépôt: 91420195.9
(22) Date de dépôt: 14.06.1991
(51) Int. Cl.: C08J 3/03, C08F 6/04

(54) **Procédé de préparation de dispersions aqueuses de particules de polymère magnétisable de distribution resserrée**
Verfahren zur Herstellung wässriger Dispersionen von magnetischen Polymerpartikeln mit verengerter Grössenverteilung
Process for preparing aqueous dispersions of magnetic polymer particles with sharp grain size distribution

(43) Date de publication de la demande: 16.12.1992
(73) Titulaire: SOCIETE PROLABO, 94120 Fontenay-sous-Bois (FR)
(72) Inventeur: Bibette, Jérôme, F-33170 Gradignan (FR); Schorsch, Gilbert, F-92700 Colombes (FR); Charmot, Dominique, F-75019 Paris (FR)
(74) Mandataire: Ahner, Francis

(56) Documents cités:
- EP-A- 0 038 730
- EP-A- 0 291 389
- EP-A- 0 299 846
- DD-A- 155 073
- GB-A- 1 416 004

## Description

La présente invention a pour objet un procédé de préparation de dispersions aqueuses de particules de polymère magnétisable de distribution resserrée à partir de dispersions aqueuses de distribution étalée desdites particules.

Les microsphères de polymères entrent dans la confection de tests de diagnostic du type Radio Immuno Assay ou Immnuno Enzymatic ; les étapes de séparation et de lavage sont simplifiées lorsque ces microsphères sont magnétisables. L'efficacité de ces microsphères est d'autant plus importante que la granulométrie de celles-ci est plus resserrée

_{;} en effet un bon resserrement granulométrique permet d'obtenir un front de sédimentation net et une phase surnageante exempte de fines particules, tout en limitant le phénomène de sédimentation dû aux grosses particules.

La monodispersité en taille permet d'accéder à la surface exacte d'adsorption des microsphères et donc à la capacité de fixation optimale de celles-ci vis-à-vis des antigènes ou des anticorps.

Dans une toute autre application, les fluides magnéto-épaississants à base de suspensions de particules de polymère magnétisables, les meilleures performances sont atteintes lorsque les particules magnétisables présentent une granulométrie resserrée.

Le brevet européen n _{°} 38730 décrit un procédé de préparation de latex de polymères magnétisables qui consiste à disperser la charge magnétique dans une phase organique contenant un amorceur organo-soluble et/ou le ou les monomère(s), à mélanger la dispersion avec une solution aqueuse formée d'eau et d'émulsifiant, à homogénéiser le mélange pour obtenir des gouttelettes de phase organique de taille comprise entre 0,03 et 5 micromètres et enfin polymérisation après addition de monomère(s) si nécessaire. La taille des particules finales correspond à celle des gouttelettes.

L'homogénéisation est réalisée dans un homo- généiseur à haut pouvoir de cisaillement (moulin colloïdal par exemple) ; les gouttelettes (donc les particules de polymère) présentent une distribution fonction du taux d'émulsifiant et du rapport phase organique/phase aqueuse.

La distribution granulométrique des particules de polymère obtenues selon ce procédé est généralement étalée.

Le document DD-A-155 073 décrit un procédé pour fractionner un latex de polymère consistant à ajouter des quantités déterminées de carboxymé- thylcellulose de sodium. Ce document indique également qu'il est souhaitable d'ajouter des quantités déterminées d'un électrolyte comme Na⁺, K⁺,HSO₄⁻.

Le document EP-A-38730 décrit un latex de polymère magnétique ayant une concentration inférieure à 65 % en poids en particule d'un diamètre de 0,03 et 5 micromètres, constitué de polymère vinylaromatique hydrophobe et renfermant 0,5 à 50 % en poids d'une charge magnétique par rapport au polymère.

Pour une distribution du type de Gauss ayant un diamètre médian de 1 um, on considérera cette distribution comme étalée si l'écart type relatif est de l'ordre de 60 %, ce qui signifie qu'environ les 2/3 en poids des particules ont un diamètre compris entre 0,4 et 1,6 um.

On considérera comme resserrée toute distribution dont l'écart type est inférieur ou égal à 30 %, et de préférence de l'ordre de 15 à 25 %.

Le but de l'invention est donc d'obtenir des distributions resserrées de particules (écart type inférieur ou égal à 30 %, de préférence de l'ordre de 15 à 25 %, voire même de l'ordre de 3 à 5 % en augmentant le nombre de fractionnements).

Le procédé de l'invention, à savoir de préparation de dispersions aqueuses de particules de polymère magnétisable de distribution resserrée à partir de dispersions aqueuses de distribution étalée desdites particules, est caractérisé en ce que :
a) on ajuste si nécessaire la quantité d'eau de la dispersion aqueuse de distribution étalée de manière à ce que la teneur pondérale en particules de polymère magnétisable (teneur en extrait sec) soit comprise entre environ 1 et 40 %, de préférence entre environ 4 % et environ 15 % de ladite dispersion ;
b) on augmente la concentration en agent tensio-actif de la dispersion obtenue à l'étape a) jusqu'à obtenir deux phases, une phase liquide où les particules sont libres et une phase solide où les particules sont associées ;
c) on sépare les deux phases ;
d) on recommence au moins une fois les étapes a), b) et c) à partir de la phase solide ou de la phase liquide pour obtenir une dispersion aqueuse de distribution désirée ;
e) on récupère la dispersion aqueuse de distribution resserrée que l'on dilue éventuellement afin d'obtenir la teneur en extrait sec désirée.

Les dispersions aqueuses de distribution étalée de départ peuvent être préparées par tout procédé connu ; on peut citer notamment les modes opératoires décrits dans le brevet européen n _{°} 38730, la demande de brevet français n ² 2 645 160 du 31.3.1989, les demandes de brevet français publiées sous les numéros 2.618.084 et 2.624.873.

Les particules des dispersions aqueuses de départ peuvent présenter une granulométrie de l'ordre de 0,01 à 20 um et de préférence de l'ordre de 0,1 à 3 um.

Parmi les polymères pouvant constituer les particules magnétisables, on peut citer les organo- polysiloxanes ainsi que les polymères dérivant de monomère(s) non miscible(s) à l'eau (c'est-à-dire de solubilité dans l'eau inférieure à 5 % en poids).

Parmi ces monomères on peut citer :
- les monomères vinylaromatiques tels que le styrène ou le vinyltoluène,
- les alkylesters d'acides α-β insaturés tels que les acrylates et méthacrylates de méthyle ou d'éthyle par exemple,
- les esters d'acides carboxyliques insaturés comme l'acétate de vinyle,
- le chlorure de vinyle ; le chlorure de vinylidè- ne
- les diènes comme le butadiène ou l'isoprène par exemple,
- ceux qui présentent une fonction nitrile comme l'acrylonitrile.

La composition monomère dont dérive ledit polymère peut contenir en outre jusqu'à 10 % de son poids (de préférence jusqu'à 4 % de son poids) d'au moins un monomère portant des groupes ionogènes ou réactifs tels que : -SO₃H, -OSO₃H, -NR₃, -COOH, -OH, -NH₂, -NR₂, 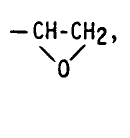 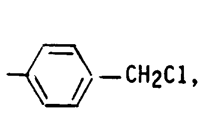 -CONH₂, -SH, 4-pyridinyl, -COOR, -PO(OR)₂, R représentant un radical alkyle en Ci - C₄, de préférence en Ci - C₂.

A titre d'exemples, on peut citer :
- le vinylbenzène sulfonate, les sulfoalkylesters d'acides insaturés comme le 2-sulfoéthylmé- thacrylate,
- les acides carboxyliques insaturés comme par exemple les acides acrylique, méthacrylique, maléïque, itaconique,
- les hydroxyalkylacrylates ou méthacrylates comme par exemple l'acrylate d'hydroxy- éthyle, l'acrylate d'hydroxypropyle,
- les aminoalkylesters d'acides insaturés comme par exemple le 2-aminoéthylméthacrylate,
- l'acrylamide,
- le chlorure de vinylbenzyle,
- le méthacrylate de glycidyle.

Les particules de polymère magnétisable contiennent de 0,5 à 70 % en poids (de préférence de 5 à 60 %) d'une charge magnétique dont la taille est inférieure à 1 um et de préférence comprise entre 0,002-0,02 µm ; la charge magnétique est bien évidemment suffisamment fine pour pouvoir être incluse dans les particules de polymère. Cette charge magnétique peut être constituée par exemple par :
- des métaux ou leurs alliages tels que : fer, fer-silicium, nickel, cobalt, samarium ou leurs alliages avec du molybdène, du chrome, du cuivre, du vanadium, du manganèse, de l'aluminium, du titane, du néodyme ;
- des oxydes de fer : Fe₃0₄ ou -y-Fe₂0₃ pur ou en combinaison ou en mélange avec d'autres oxydes comme les oxydes de cobalt, de manganèse, de zinc, de baryum ou de terres rares ;
- du dioxyde de chrome.

Le taux d'extrait sec des dispersions aqueuses de distribution étalée de départ est inférieur à 65 % en poids ; il est généralement de l'ordre de 5 à 30 % en poids.

Le taux d'agent tensio-actif des dispersions aqueuses de distribution étalée de départ est situé entre 0,1 et 2 fois la CMC (concentration micellaire critique : concentration en agent tensio-actif nécessaire à l'apparition des premiers agrégats d'agent tensio-actif appelés micelles). Ces agents tensio-actifs, qui assurent la stabilité de la dispersion peuvent être anioniques, cationiques, amphotères ou non-ioniques.

Parmi les agents tensio-actifs anioniques on peut citer les alkylbenzènesulfonates de métaux alcalins, alkylsulfates de métaux alcalins tel que le dodécylsulfate de sodium, les alkyléthersulfates de métaux alcalins, les alkylaryléthersulfates de métaux alcalins et les dioctylsulfosuccinates de métaux alcalins.

Parmi les agents tensio-actifs cationiques on peut citer les halogénures de dialkyl(C,_{O}-C₃₀) ben- zyldiméthylammonium et les sels d'ammonium quaternaires polyéthoxylés.

Parmi les agents tensio-actifs amphotères on peut citer les N-alkyl (C₁₀-C₂₂) bétaïnes, les N-alkyl (C₁₀-C₂₂) amidobétaïnes, les alkyl (C₁₀-C₂₂) imidazolines et les dérivés de l'asparagine.

Parmi les agents tensio-actifs non ioniques on peut citer les acides gras polyéthoxylés, les esters de sorbitan, les esters de sorbitan polyéthoxylés, les alkylphénols polyéthoxylés, les alcools gras polyéthoxylés, les amides gras polyéthoxylés ou po- lyglycérolés, les alcools et alphadiols polyglycéro- lés.

La quantité d'agent tensio-actif à introduire à l'étape b) est celle nécessaire à l'obtention de deux phases, une phase liquide où les particules sont libres et une phase solide où les particules sont associées.

Pour obtenir une telle séparation il suffit généralement de rajouter à la dispersion obtenue à l'étape a) une quantité d'agent tensio-actif telle que la concentration en agent tensio-actif atteigne de 2,5 à 20 fois la CMC et de préférence de l'ordre de 2,5 à 10 fois la CMC.

L'agent tensio-actif mis en oeuvre peut être le ou les même(s) que celui ou ceux de la dispersion de départ ou tout agent tensio-actif compatible avec celui ou ceux de départ. Des exemples d'agents tensio-actifs ont été donnés ci-dessus.

Les deux phases sont ensuite séparées par tout moyen, pompage, aspiration..., la décantation étant éventuellement accélérée par un champ magnétique.

On recommence éventuellement les opérations a), b) et c) sur la phase solide séparée autant de fois qu'il est nécessaire pour obtenir la dispersion de distribution resserrée désirée.

Cette phase solide est éventuellement homogénéisée et diluée à l'eau pour obtenir une dispersion monophasée où les particules sont bien séparées.

La ou les phases solides ainsi séparées par le procédé de l'invention ont une distribution de plus en plus resserrée. La taille des particules de la phase solide est mesurée par exemple par microscopie optique ou à l'aide de granulomètres adaptés.

Le caractère plus ou moins resserré est évalué par le taux de polydispersité.

Bien entendu la phase liquide récupérée en c), peut être considérée comme dispersion de départ de l'étape a) mais dépourvue de la population de particules récupérée dans la phase solide. Par conséquent on peut sur cette phase liquide appliquer au moins une fois les étapes b) et c) du procédé de l'invention. Les phases solides générées par des concentrations en agent tensio-actif de plus en plus grandes seront constituées de particules de plus en plus petites. Ceci étant une conséquence de l'action de l'agent tensio-actif et constitue le fondement du procédé selon l'invention.

Généralement on aboutit au résultat en répétant de 1 à 8 fois (plus généralement de 2 à 5 fois) les étapes a), b) et c) sur la phase liquide et/ou la phase solide.

Les exemples suivants sont donnés à titre indicatif et ne peuvent être considérés comme une limite du domaine et de l'esprit de l'invention.

### EXEMPLE 1

La dispersion aqueuse de microsphères magnétiques traitée dans le présent exemple est commercialisée par Rhône-Poulenc sous la référence ESTAPOR @ M1-180/12. Il s'agit de particules composites constituées de polystyrene et d'oxyde magnétique ; la teneur en oxyde magnétique est de l'ordre de 12 % en poids. La distribution en taille de particules est polydisperse avec des diamètres typiquement compris entre 0,1 micromètre et 5 micromètres et environ 70 % en poids des microsphères ayant un diamètre compris entre 1 micromètre et 3 micromètres ; la taille moyenne en poids est de l'ordre de 1,8 micromètre.
a) La dispersion est diluée par de l'eau désioni- sée pour amener la teneur en particules à environ 5 % (poids %).
b) On ajoute alors une quantité suffisante de laurylsulfate de sodium (SLS) pour que la concentration en SLS dans la dispersion soit de C1 = 0,02 mole/litre.
c) On laisse la dispersion au repos pendant environ 15 heures, temps au bout duquel on observe une séparation de phases, respectivement solide et liquide ; la phase solide est décantée au fond du récipient, la phase liquide est aspirée délicatement.

Dès l'étape c) terminée, la phase liquide récupérée est retraitée comme en b) en portant cette fois la concentration C₂ en SLS à 0,04 mole/litre, puis on enchaîne l'étape c) comme précédemment.

On réitère le cycle d'opération b), c) encore 2 fois sur la phase liquide pour arriver à une concentration C₄ en SLS de 0,08 mole/litre.

La phase solide récupérée à l'issue de cette dernière opération est alors redispersée dans de l'eau distillée ; la distribution en taille des particules magnétiques est analysée à l'aide d'un photosédimentomètre centrifuge Brookhaven @ DCP 1000 commercialisé par Brookhaven Inst. Corp.

La courbe de distribution en taille est représentée sur la figue 1.

La courbe a) représente la courbe de distribution cumulée en poids, la courbe b) celle de distribution en poids.

On en déduit que :
- le diamètre moyen en poids des particules est de 0,26 um avec un écart type de 0,071 um.
- le degré de polydispersité est de 27 % (contre 55 % pour la dispersion de départ)

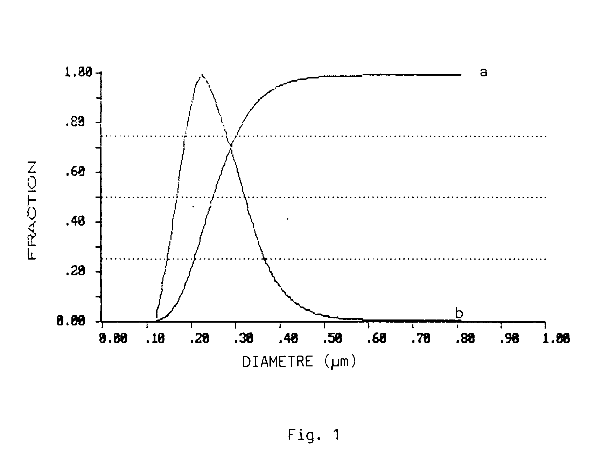

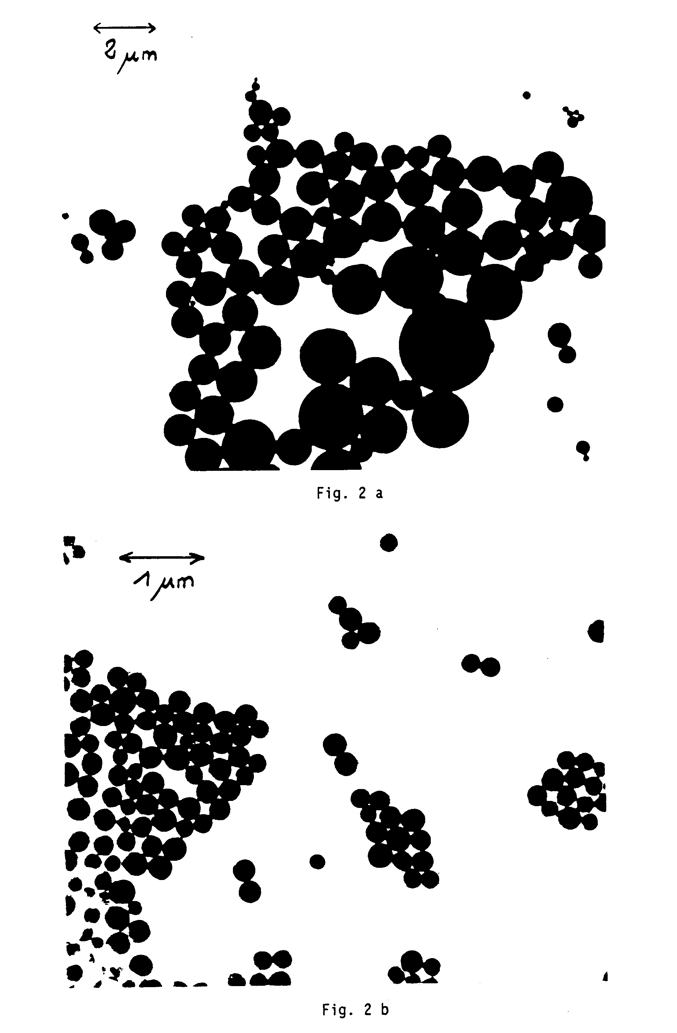

La figure 2, où l'on compare les distributions de tailles de particules par Microscopie Electronique à Transmission avant (fig.2 a) et après fractionnement (fig. 2 b), illustre bien l'efficacité du procédé de séparation et de resserrement granulométrique.

### EXEMPLE 2

Dans cet exemple la dispersion aqueuse de microsphères magnétiques porte la référence ESTAPOR @ M1-070/60. La teneur en oxyde magnétique est de l'ordre de 60 % en poids. La distribution en taille de particules est polydisperse avec des diamètres typiquement compris entre 0,05 micromètre et 3 micromètres et environ 70 % en poids des microsphères ayant un diamètre compris entre 0,3 micromètre et 1 micromètre ; la taille moyenne en poids est de l'ordre de 0,7 micromètre.

Un cycle d'opération a), b) c) semblable à celui de l'exemple 1 est réalisé puis réitéré 2 fois sur la phase liquide pour arriver à une concentration C₃ en SLS de 0.06 mole/litre.

La phase solide récupérée est redispersée à un extrait sec de l'ordre de 5 % en poids. On ajoute du SLS jusqu'à une concentration de 0,05 mole/litre. La suspension est laissée au repos pendant 15 heures, la phase solide décantée est récupérée et redispersée dans de l'eau distillée ; la distribution en taille des particules magnétiques est analysée à l'aide d'un photosédimentomètre centrifuge Brookhaven @ DCP 1000. Le degré de polydispersité est estimé à 35 % (contre 50 % pour la dispersion de départ).

### EXEMPLE 3

A la suspension récupérée à l'issue du traitement de l'exemple 2, est ajouté du SLS jusqu'à une concentration de 0,06 mole/litre. On procède alors à l'opération c) de l'exemple 1 ; la phase solide est récupérée, traitée suivant les opérations a) et b) de l'exemple 1 à une concentration en SLS de 0,06 mole/litre puis on enchaîne par l'opération c) comme précédemment pour récupérer une fraction solide.

Celle-ci apparaît après 48 heures iridescente et présente la particularité de difracter la lumière visible (couleur violet, vert et rouge) ; ceci est le signe évident que l'échantillon de particules fractionné a formé un cristal colloïdal. Ces cristaux colloidaux sont rendus possibles seulement lorsque les particules qui le constituent possèdent une distribution de taille particulièrement resserrée, voire monodis- perse. On a ainsi fait la preuve que le procédé de l'invention permet d'accéder à une dispersion de particules monodisperses à partir d'une dispersion de microsphères à distribution étalée.

## Revendications

1. Procédé de préparation de dispersions aqueuses de particules de polymère magnétisable de distribution resserrée à partir de dispersions aqueuses de distribution étalée desdites particules, caractérisé en ce que :
a) on ajuste si nécessaire la quantité d'eau de la dispersion aqueuse de distribution étalée de manière à ce que la teneur pondérale en particules de polymère magnétisable (teneur en extrait sec) soit comprise entre environ 1 et 40 % de ladite dispersion
b) on augmente la concentration en agent tensio-actif de la dispersion obtenue à l'étape a) jusqu'à obtenir deux phases, une phase liquide où les particules sont libres et une phase solide où les particules sont associées ;
c) on sépare les deux phases ;
d) on recommence au moins une fois les étapes a), b) et c) à partir de la phase solide ou de la phase liquide pour obtenir une dispersion aqueuse de distribution désirée ;
e) on récupère la dispersion aqueuse de distribution resserrée que l'on dilue éventuellement afin d'obtenir la teneur en extrait sec désirée.

2. Procédé selon la revendication 1 caractérisé en ce que la dispersion de départ renferme des particules dont la granulométrie va de 0,01 à 20 um.

3. Procédé selon la revendication 1 ou 2 caractérisé en ce que les particules de polymère renferment de 0,5 à 70 % en poids d'une charge magnétique.

4. Procédé selon l'une quelconque des revendications précédentes caractérisé en ce qu'à l'étape a) la teneur pondérale en particules va d'environ 4 % à environ 15 % de ladite dispersion.

5. Procédé selon l'une quelconque des revendications précédentes caractérisé en ce que l'agent tensio-actif introduit à l'étape b) est anionique, cationique, amphotère ou non-ionique.

6. Procédé selon l'une quelconque des revendications précédentes caractérisé en ce que la quantité d'agent tensio actif introduite à l'étape b) est telle que la concentration en agent tensio-actif atteigne 2,5 à 20 fois la CMC.

7. Procédé selon la revendication 6 caractérisé en ce que la quantité d'agent tensio actif introduite à l'étape b) est telle que la concentration en agent tensio-actif atteigne 2,5 à 10 fois la CMC.

8. Procédé selon l'une quelconque des revendications précédentes caractérisé en ce que les étapes b) et c) sont répétées 1 à 8 fois à partir de la phase liquide séparée en c).

9. Procédé selon la revendication 8 caractérisé en ce que les étapes b) et c) sont répétées 2 à 5 fois à partir de la phase liquide séparée en c).

10. Procédé selon l'une quelconque des revendications précédentes caractérisé en ce que les étapes a), b) et c) sont répétées 1 à 8 fois à partir de le phase solide séparée en c).

11. Procédé selon la revendication 10 caractérisé en ce que les étapes a), b) et c) sont répétées de 2 à 5 fois à partir de la phase solide séparée en c).

## Claims

1. Process for the preparation of aqueous dispersions of magnetizable polymer particles with a narrow distribution from aqueous dispersions of said particles with a wide distribution, characterized in that:
a) the amount of water in the aqueous dispersion with a wide distribution is adjusted, if necessary, so that the proportion by weight of magnetizable polymer particles (solids content) is between about 1 and 40% of said dispersion;
b) the surfactant concentration of the dispersion obtained in step a) is increased until two phases are obtained: a liquid phase in which the particles are free, and a solid phase in which the particles are associated;
c) the two phases are separated;
d) steps a), b) and c) are repeated at least once on the solid phase or on the liquid phase to give an aqueous dispersion with the desired distribution; and
e) the aqueous dispersion with a narrow distribution is recovered and diluted, if appropriate, to give the desired solids content.

2. Process according to Claim 1, characterized in that the starting dispersion contains particles with a size distribution ranging from 0.01 to 20 /.Lm.

3. Process according to Claim 1 or 2, characterized in that the polymer particles contain from 0.5 to 70% by weight of a magnetic charge.

4. Process according to any one of the preceding claims, characterized in that, in step a), the proportion by weight of particles ranges from about 4% to about 15% of said dispersion.

5. Process according to any one of the preceding claims, characterized in that the surfactant introduced in step b) is anionic, cationic, amphoteric or non-ionic.

6. Process according to any one of the preceding claims, characterized in that the amount of surfactant introduced in step b) is such that the surfactant concentration reaches 2.5 to 20 times the CMC.

7. Process according to Claim 6, characterized in that the amount of surfactant introduced in step b) is such that the surfactant concentration reaches 2.5 to 10 times the CMC.

8. Process according to any one of the preceding claims, characterized in that steps b) and c) are repeated 1 to 8 times on the liquid phase separated off in c).

9. Process according to Claim 8, characterized in that steps b) and c) are repeated 2 to 5 times on the liquid phase separated off in c).

10. Process according to any one of the preceding claims, characterized in that steps a), b) and c) are repeated 1 to 8 times on the solid phase separated off in c).

11. Process according to Claim 10, characterized in that steps a), b) and c) are repeated from 2 to 5 times on the solid phase separated off in c).

## Patentansprüche

1. Verfahren zur Herstellung von wäßrigen Dispersionen von magnetisierbaren Polymerteilchen mit einer engen Teilchengrößenverteilung, bei dem man von wäßrigen Dispersionen der genannten Teilchen mit breiter Teilchengrößenverteilung ausgeht, dadurch gekennzeichnet, daß man
a) die Wassermenge der wäßrigen Dispersion mit breiter Teilchengrößenverteilung erforderlichenfalls so einstellt, daß der Gewichtsgehalt an magnetisierbaren Polymerteilchen (Gehalt an Trockenextrakt) zwischen etwa 1 und etwa 40 % der genannten Dispersion liegt;
b) die Konzentration der in der Stufe (a) erhaltenen Dispersion an oberflächenaktivem Agens erhöht, bis man zwei Phasen erhält, eine flüssige Phase, in der die Teilchen in freier Form vorliegen, und eine feste Phase, in der die Teilchen in gebundener Form vorliegen;
c) die beiden Phasen voneinander trennt;
d) die Stufen (a), (b) und (c) mindestens einmal wiederholt, wobei man von der festen Phase oder der flüssigen Phase ausgeht, unter Bildung einer wäßrigen Dispersion mit der gewünschten Teilchengrößenverteilung; und
e) die wäßrige Dispersion mit enger Teilchengrößenverteilung gewinnt (abtrennt), die man gegebenenfalls verdünnt zur Erzielung des gewünschten Gehalts an Trockenextrakt.

2. Verfahren nach Anspruch 1, dadurch gekennzeichnet, daß die Ausgangs-Dispersion Teilchen enthält, deren Korngröße zwischen 0,01 und 20 um liegt.

3. Verfahren nach Anspruch 1 oder 2, dadurch gekennzeichnet, daß die Polymerteilchen zu 0,5 bis 70 Gew.-% eine magnetische Ladung enthalten.

4. Verfahren nach einem der vorhergehenden Ansprüche, dadurch gekennzeichnet, daß in der Stufe (a) der Gewichtsgehalt an Teilchen etwa 4 bis etwa 15 % der genannten Dispersion beträgt.

5. Verfahren nach einem der vorhergehenden Ansprüche, dadurch gekennzeichnet, daß das in Stufe (b) eingeführte oberflächenaktive Agens anionisch, kationisch, amphoter oder nicht-ionisch ist.

6. Verfahren nach einem der vorhergehenden Ansprüche, dadurch gekennzeichnet, daß die Menge des in Stufe (b) eingeführten oberflächenaktiven Agens so groß ist, daß die Konzentration an oberflächenaktivem Agens das 2,5- bis 20-fache derjenigen an CMC erreicht.

7. Verfahren nach Anspruch 6, dadurch gekennzeichnet, daß die Menge des in Stufe (b) eingeführten oberflächenaktiven Agens so groß ist, daß die Konzentration an oberflächenaktivem Agens das 2,5- bis 10-fache derjenigen von CMC erreicht.

8. Verfahren nach einem der vorhergehenden Ansprüche, dadurch gekennzeichnet, daß man die Stufen (b) und (c) 1 bis 8 mal wiederholt, wobei man von der in der Stufe (c) abgetrennten flüssigen Phase ausgeht.

9. Verfahren nach Anspruch 8, dadurch gekennzeichnet, daß man die Stufen (b) und (c) 2 bis 5 mal wiederholt, wobei man von der in der Stufe (c) abgetrennten flüssigen Phase ausgeht.

10. Verfahren nach einem der vorhergehenden Ansprüche, dadurch gekennzeichnet, daß man die Stufen (a), (b) und (c) 1 bis 8 mal wiederholt, wobei man von der in der Stufe (c) abgetrennten festen Phase ausgeht.

11. Verfahren nach Anspruch 10, dadurch gekennzeichnet, daß man die Stufen (a), (b) und (c) 2 bis 5 mal wiederholt, wobei man von der in der Stufe (c) abgetrennten festen Phase ausgeht.
